# EUROPÄISCHE PATENTSCHRIFT

(11) **EP 2 229 655 B1**
(45) Veröffentlichungstag und Bekanntmachung des Hinweises auf die Patenterteilung: **25.02.2015**
(21) Anmeldenummer: 08856315.0
(22) Anmeldetag: 04.12.2008
(51) Int. Cl.: G06K 19/077

(54) **DISPLAYMODUL UND DATENTRÄGER MIT EINGESETZTEM DISPLAYMODUL**
DISPLAY MODULE AND DATA STORAGE MEDIUM WITH AN INSERTED DISPLAY MODULE
MODULE D'AFFICHAGE ET SUPPORT DE DONNÉES AVEC MODULE D'AFFICHAGE INTÉGRÉ

(30) Priorität: 05.12.2007 DE 102007058547
(43) Veröffentlichungstag der Anmeldung: 22.09.2010
(73) Patentinhaber: Giesecke & Devrient GmbH, 81677 München (DE)
(72) Erfinder: SCHILLER, Christoph, 81827 München (DE); TARANTINO, Thomas, 83410 Laufen (DE); GRAF, Hans, A-6850 Dornbirn (AT); KLUGE, Stefan, 80997 München (DE); STEGMÜLLER, Michael, 80809 München (DE); SCHRÖPF, Manuela, 81543 München (DE)
(86) Internationale Anmeldenummer: PCT/EP2008/010311
(87) Internationale Veröffentlichungsnummer: WO 2009/071305

(56) Entgegenhaltungen:
- DE-C1- 19 703 122
- FR-A- 2 776 796

## Beschreibung

Die vorliegende Erfindung betrifft ein Modul, welches eine Kontaktschnittstelle, einen integrierten Schaltkreis und ein Display umfasst, sowie einen portablen Datenträger mit einem solchen Modul. Die Erfindung betrifft weiterhin ein Verfahren zur Herstellung eines entsprechenden Moduls und eines entsprechenden Datenträgers.

Portable Datenträger, insbesondere in Form von Chipkarten, Schlüsselanhänger oder Karten-Token, mit einem Display werden als Ausweiskarten, Kreditkarten, Telefonkarten oder dergleichen sowie als so genannte "elektronische Geldbörsen" für den bargeldlosen Zahlungsverkehr eingesetzt.

Es hat sich gezeigt, dass ein Aufbau von Chipkarten mit Display im Mehrlagenverfahren, bei welchem mehrere Lagen von Kunststofffolien unter Druck und Hitze zu einem Kartenkörper zusammengefügt werden, technisch aufwändig und kostenintensiv ist. Die Funktionsschichten des Displays müssen dabei während des Produktionsprozesses in die jeweiligen Lagen eingefügt werden und sind demnach einer hohen Druckbelastung ausgesetzt, welche das Display bereits bei der Herstellung beschädigen oder gar zerstören kann.

Die DE 10210 606 A1 beschreibt ein Displaymodul, bei welchem unmittelbar auf ein Displaysubstrat ein Ansteuerchipmodul aufkontaktiert ist. Das Ansteuerchipmodul beinhaltet dabei die Ansteuerelektronik zum Ansteuern der einzelnen Elemente des Displays. Der Ansteuerchip ist auf einer Leiterbahnanordnung aufkontaktiert und mit einer Vergussmasse vor Umwelteinflüssen und mechanischen Beanspruchungen geschützt Das Displaymodul kann als Steckmodul ausgebildet sein, welches von einem Nutzer in die Chipkarte eingesetzt und daraus entfernt werden kann. Eine Einrichtung, mittels derer ein integrierter Schaltkreis der Chipkarte mit dem Displaymodul elektronisch kontaktiert werden kann, muss in der Chipkarte separat vorgesehen werden.

Die EP 1 411 467 A1 beschreibt eine Chipkarte, die außerhalb einer Hauptbiegelinie der Chipkarte eine gemeinsame Kavität für ein Chipmodul und ein Display besitzt, wobei das Chipmodul eine Kontaktschnittstelle und einen damit kontaktierten integrierten Schaltkreis umfasst. Das Chipmodul und das Display sind elektronisch miteinander verbunden und können zu einem einheitlichen Modul vergossen sein, welches dann als ein Bauelement in die gemeinsame Kavität der Chipkarte eingesetzt wird. Dabei ist die elektronische Kontaktierung von Display und integriertem Schaltkreis bereits in dem einheitlichen Modul ausgebildet. Wegen seiner räumlichen Ausdehnung ist vor allem das einheitliche Modul, zu welchem Chipmodul und Display vergossen sind, trotz seiner Anordnung außerhalb der Hauptbiegelinie der Chipkarte weiterhin anfällig für eine Beschädigung durch Biegebelastungen, die auf die Chipkarte wirken.

Aus der FR 2 776 796 ist ein integrierter Schaltkreis mit kontaktschnittstelle und Anzeigeeinrichtung bekannt, die eine zwischenschicht in einer Datenträger bildet

Es ist demnach die Aufgabe der vorliegenden Erfindung, ein Verfahren zum kostengünstigen Herstellen eines robusten portablen Datenträgers mit einem Display vorzuschlagen sowie ein dazu geeignetes Modul mit Display und einen geeigneten Datenträger anzugeben.

Diese Aufgabe wird durch ein Modul, einen Datenträgerkörper und einen Datenträger sowie durch Verfahren zur Herstellung des Moduls, des Datenträgerkörpers und des Datenträgers mit den Merkmalen der unabhängigen Ansprüche gelöst. Vorteilhafte Ausgestaltungen und Weiterbildungen sind in den abhängigen Ansprüchen angegeben.

Demnach umfasst ein erfindungsgemäßes Modul zum Einsetzen in einen Datenträgerkörper eine Kontaktschnittstelle mit einer Kontaktfläche, zumindest einen integrierten Schaltkreis und eine Anzeigeeinrichtung mit einer Anzeigefläche, wobei die Kontaktschnittstelle, der zumindest eine Schaltkreis und die Anzeigeeinrichtung miteinander verbunden sind. Erfindungsgemäß sind die Kontaktschnittstelle und die Anzeigeeinrichtung in dem Datenträgerkörper derart anordnbar, dass die Kontaktfläche der Kontaktschnittstelle und die Anzeigefläche der Anzeigeeinrichtung in entgegengesetzte Richtungen weisen. Die Kontaktschnittstelle, der zumindest eine Schaltkreis und die Anzeigeeinrichtung können auf vielfältige Weise miteinander zu dem Modul verbunden werden, wobei die Verbindung mechanischer und/oder elektronischer Art sein kann, wesentlich ist dabei nur, dass diese Einzelkomponenten des Moduls nicht mehr separat vorliegen.

Dabei ist, das Modul mittels eines Vergussmaterials derart ausgegossen, dass die Kontaktschnittstelle und die Anzeigeeinrichtung derart auf einander gegenüberliegenden Seiten des vergossenen Moduls angeordnet sind, dass das Modul in der oben beschriebenen Weise in den Datenträgerkörper eingesetzt werden kann. Das Modul erhält somit seine definierte Form und kann auf einfachem Weg in eine entsprechend ausgeformte Öffnung eines Datenträgerkörpers eingesetzt werden. Eine derartige Formgebung des Moduls kann auch durch geeignetes Verkleben oder Verlöten der Leiterplatte erreicht werden.

Bei der Kontaktschnittstelle ist es alternativ möglich, daß diese auf der Kartenoberfläche keine Kontaktflächen aufweist. Anstatt der Kontaktfläche kann eine Abdeckplatte vorhanden sein. Damit kann das Modul beliebig auf oder in der Karte platziert werden. Falls die Kontaktschnittstelle Kontaktflächen hat, dann muß das Modul in der Position platziert werden, die von einer Norm, z.B. der ISO 7816 vorgegeben ist.

Dementsprechend umfasst ein erfindungsgemäßer portabler Datenträger einen Datenträgerkörper und ein in eine durchgängige Öffnung des Datenträgerkörpers derart eingesetztes erfindungsgemäßes Modul, dass die Kontaktschnittstelle und die Anzeigeeinrichtung auf gegenüberliegenden Seiten des Datenträgerkörpers angeordnet sind und die Kontaktfläche der Kontaktschnittstelle und die Anzeigefläche der Anzeigeeinrichtung in entgegengesetzte Richtungen weisen.

Bei einem erfindungsgemäßen Verfahren zum Herstellen des Moduls werden demnach die Kontaktschnittstelle, der zumindest eine integrierte Schaltkreis und die Anzeigeeinrichtung miteinander zu einem Modul verbunden, welches derart in dem Datenträgerkörper anordnbar ist, dass die Kontaktfläche der Kontaktschnittstelle und die Anzeigefläche der Anzeigeeinrichtung in entgegengesetzte Richtungen weisen. Dabei ist es einerseits möglich, dass das Modul bereits vor dem Einsetzen in die Öffnung des Datenträgerkörpers eine feste, definierte Form aufweist, gemäß der die Anzeigeeinrichtung und die Kontaktschnittstelle an gegenüberliegenden Seiten des Moduls angeordnet sind. Andererseits ist es möglich, dass die Einzelkomponenten des Moduls flexibel oder bewegbar verbunden sind und die gegenüberliegenden Seiten des Moduls erst durch das Einsetzen des Moduls in die Öffnung des Datenträgerkörpers definiert werden. D.h., das Modul besitzt vor dem Einsetzen in die Öffnung noch eine variable, veränderbare Form, die es jedoch gestattet, das Modul in der Weise in die Öffnung des Datenträgerkörpers einzusetzen, dass die Kontaktschnittstelle und die Anzeigeeinrichtung auf gegenüberliegenden Seiten des Datenträgerkörpers angeordnet sind und die Kontaktfläche der Kontaktschnittstelle und die Anzeigefläche der Anzeigeeinrichtung in entgegengesetzte Richtungen weisen.

Bei einem erfindungsgemäßen Verfahren zum Herstellen des Datenträgers wird ein flächiger Datenträgerkörper mit durchgängiger Öffnung sowie eine Kontaktschnittstelle, zumindest ein integrierter Schaltkreis und eine Anzeigeeinrichtung bereitgestellt. Die Kontaktschnittstelle, der zumindest eine integrierte Schaltkreis und die Anzeigeeinrichtung werden miteinander verbunden und in der Öffnung des Datenträgerkörpers derart angeordnet, dass die Kontaktschnittstelle und die Anzeigeeinrichtung auf gegenüberliegenden Seiten des Datenträgerkörpers so angeordnet sind, dass die Kontaktfläche der Kontaktschnittstelle und die Anzeigefläche der Anzeigeeinrichtung in entgegengesetzte Richtungen weisen.

Mit Hilfe der beschriebenen Verfahren kann in effektiver und kostengünstiger Weise ein robuster portabler Datenträger mit einer Anzeigeeinrichtung hergestellt werden. Die Ausgestaltung des Moduls erlaubt die beschriebene vorteilhafte Anordnung der Bauteile in der Öffnung des Datenträgerkörpers. Dadurch sind die Bauteile vor Druck- und Biegebelastungen gut geschützt, da das in die Öffnung des Datenträgerkörpers eingesetzte Modul eine sehr kompakte Form annimmt. Sensible Bauteile sind im Innern des Datenträgerkörpers verborgen und die Ausbreitung des Moduls in der Fläche ist minimiert. Auf diese Weise können vor allem die Auswirkungen von Biegebelastungen auf das Modul gering gehalten werden. Das Modul kann aus Standardkomponenten oder speziellen Bauteilen zusammengestellt und als Halbzeug unabhängig von dem Datenträgerkörper hergestellt werden. Das gleiche gilt für den Datenträgerkörper. Die beschriebene Anordnung von Anzeigeeinrichtung und Kontaktschnittstelle auf gegenüberliegenden Seiten des Datenträgerkörpers erlaubt es zudem, dass die Anzeigefläche der Anzeigeeinrichtung leicht abgelesen werden kann, während der Datenträger über die Kontaktschnittstelle von einem entsprechend eingerichteten Kontakt-Lesegerät kontaktiert wird.

Gemäß einer ersten Ausführungsform ist das Modul als eine flexible Leiterplatte ausgebildet, auf der die Kontaktschnittstelle, der zumindest eine integrierte Schaltkreis und die Anzeigeeinrichtung angeordnet und elektronisch miteinander verbunden sind. Aufgrund der flexiblen Form des Moduls kann es zum Einsetzen in verschiedene Datenträgerkörper verwendet werden, wobei die endgültige Form des Moduls erst beim Einsetzen definiert wird.

Gemäß einer zweiten Ausführungsform umfasst das Modul zwei Leiterplatten, die elektronisch miteinander verbunden sind. Auf der ersten Leiterplatte ist die Kontaktschnittstelle angeordnet, auf der zweiten Leiterplatte die Anzeigeeinrichtung. Auf diese Weise ist es möglich, das Modul aus Standardkomponenten herzustellen, die dann nur noch geeignet elektronisch miteinander verbunden werden müssen.

Das Modul kann genau einen integrierten Schaltkreis enthalten, der dann auf der ersten Leiterplatte angeordnet ist, wenn z.B. ein Standardchipmodul mit einer Kontaktschnittstelle und/oder einer Kontaktlosschnittstelle und einem mit dieser Schnittstelle kontaktierten und vergossenen integrierten Schaltkreis auf einer ersten Leiterplatte und ein gewöhnliches Display als Anzeigeeinrichtung auf einer zweiten Leiterplatte verwendet werden, wobei das Display über den einen integrierten Schaltkreis des Chipmoduls angesteuert wird. Als Kontaktlosschnittstelle könnte man auf einer oder beiden Leiterplatten auch eine Antenne integrieren.

Andererseits kann das Modul auch zumindest zwei integrierte Schaltkreise umfassen, beispielsweise zusätzlich einen separaten zur Ansteuerung der Anzeigeeinrichtung und/oder einen Kryptochip oder dergleichen. Die Schaltkreise können sowohl auf der ersten Leiterplatte als auch auf der zweiten Leiterplatte oder ausschließlich auf einer der beiden Leiterplatten angeordnet sein. In einer solchen Ausgestaltung ist es möglich, ein Modul an die speziellen Anforderungen eines herzustellenden Datenträgers anzupassen. Neben den integrierten Schaltkreisen können sich auf einer oder beiden Leiterplatten auch zusätzliche passive Bauelemente, wie z.B. Kondensatoren befinden.

Die beiden Leiterplatten können auf vielfältige Weise elektronisch miteinander verbunden werden, beispielsweise mittels einer die beiden Leiterplatten kontaktierenden anisotropen Kontaktleiste. Es ist auch möglich, ein Drahtgitter mit den beiden Leiterplatten zu verbinden, beispielsweise durch Verlöten, Verkleben oder Verschweißen, wobei dann das Drahtgitter die elektronische Verbindung zwischen den beiden Leiterplatten herstellt. Das Drahtgitter besteht aus mindestens zwei parallel zueinander angeordneten Drähten, die sich gegenseitig nicht berühren. Schließlich können die beiden Leiterplatten mittels Bond-Drähten elektronisch verbunden werden.

Andere Arten der Verbindung der beiden Leiterplatten sind gleichfalls möglich. Zumindest eine der beiden Leiterplatten kann als flexible Leiterplatte ausgebildet werden. Diese flexible Leiterplatte kann dann mit der anderen Leiterplatte mittels Verlötens, Verklebens oder Verschweißens oder auf eine andere geeignete Weise elektronisch und/ oder mechanisch verbunden werden.

Die integrierten Schaltkreise in dem Modul sind in der Regel dadurch vor eventuell schädigendem Lichteinfall geschützt, dass sie in dem Modul zwischen der Kontaktschnittstelle und der Anzeigeeinrichtung angeordnet sind. In den Fällen, in denen die Schaltkreise an einer anderen Stelle angeordnet sind, z.B. auf der gleichen Seite einer Leiterplatte wie die Anzeigeeinrichtung und neben derselben oder auf der Seite der Leiterplatte gegenüber der Anzeigeeinrichtung, jedoch nicht verdeckt durch die Anzeigeeinrichtung, können die Schaltkreise mit zusätzlichen Einrichtungen vor Lichteinfall geschützt werden. Es ist z.B. möglich, die Schaltkreise mittels eines Lichtschutz-Vergussmaterials zu vergießen oder die Leiterplatte an der entsprechenden Stelle auf der Seite gegenüber den Schaltkreisen mit einer Lichtschutzschicht, z.B. einer dünnen Kupferschicht, zu überziehen.

Gemäß einer vorteilhaften Ausgestaltung ist in dem Modul Vergussmaterial derart angeordnet, dass die erste Leiterplatte und die zweite Leiterplatte voneinander beabstandet und/ oder räumlich zueinander angeordnet in dem Datenträgerkörper anordnbar sind. D.h., das Vergussmaterial bestimmt nicht notwendig die endgültige Form des Moduls, solange dieses nicht in die Öffnung des Datenträgerkörpers eingesetzt ist, sondern wirkt als formgebend für das Modul erst in dem Moment, in dem das Modul tatsächlich in die Öffnung eingesetzt wird. Es ist z.B. möglich, jeweils die Seite der ersten und/ oder zweiten Leiterplatte, die der Kontaktschnittstelle bzw. der Anzeigeeinrichtung gegenüberliegt, mit Vergussmaterial zu vergießen und dieses geeignet plan zu formen. Neben einem Schutz für die eventuell vergossenen integrierten Schaltkreise, die auf den jeweiligen Leiterplatten angeordnet sind, können so die beiden Leiterplatten beim Einsetzen in die Öffnung des Datenträgerkörpers beabstandet werden, indem die jeweiligen Vergussmaterialien aneinander stoßen bzw. ein Vergussmaterial auf einer Leiterplatte an die nicht vergossene andere Leiterplatte stößt. Das Modul erreicht dadurch, wenn es in die Öffnung eingesetzt wird, im Wesentlichen die gleiche Dicke wie der Datenträgerkörper.

Um dem Modul schon vor dem Einsetzen in die Öffnung des Datenträgerkörpers seine endgültige Form zu geben, kann das Vergussmaterial entsprechend in dem Modul ausgeformt und mit den Komponenten im Modul verbunden werden. Es ist z.B. möglich, die beiden vorstehend beschriebenen vergossenen Seiten der beiden Leiterplatten miteinander zu verkleben oder eine nicht vergossene Leiterplatte mit dem Vergussmaterial auf der anderen, vergossenen Leiterplatte zu verkleben. Dabei ist die nicht vergossene Leiterplatte vorzugsweise flexibel ausgebildet, so dass sie sich der Form des Vergussmaterials auf der anderen Leiterplatte anpassen kann.

Gemäß einer vorteilhaften Ausgestaltung ist das Vergussmaterial in einem vergossenen Modul oder in einem in dem Datenträgerkörper angeordneten Modul zwischen der Kontaktschnittstelle und der Anzeigeeinrichtung stufenförmig ausgebildet. Dementsprechend ist die durchgehende Öffnung in dem Datenträgerkörper komplementär dazu ebenfalls stufenförmig ausgebildet. Auf diese Weise wird das Fixieren des Moduls in der Öffnung erleichtert, wenn das Modul z.B. in die Öffnung geklebt wird. Die Stufen können hierbei als Klebeflächen dienen.

In dem Datenträgerkörper kann zusätzlich auf einer der Stufen eine Kontaktlos-Schnittstelle, z.B. in Form einer Antennenspule, aufgebracht sein, beispielsweise aufgedruckt. Das Modul besitzt dann auf einer der Leiterplatten mindestens einen Kontakt zum Kontaktieren der Kontaktlos-Schnittstelle beim Einsetzen des Moduls in die Öffnung des Datenträgerkörpers. Ein Schaltkreis des Moduls kann dadurch auch kontaktlos mit einem entsprechenden Lesegerät kommunizieren und der Datenträger wird zum Dual-Interface-Datenträger. Falls die Kontaktflächen an der Position einer Norm, z.B. ISO 7816 fehlen, dann wird der Datenträger nicht zu einem Dual-Interface-Datenträger, weil dann nur eine Kontaktlosschnittstelle vorhanden ist.

Das Modul kann weiterhin eine Eingabeeinrichtung, z.B. einen Knopf, zum manuellen Eingeben von Daten umfassen. Die Eingabeeinrichtung ist mit dem zumindest einen Schaltkreis und der Anzeigeeinrichtung elektronisch verbunden und die Eingabeeinrichtung und die Anzeigeeinrichtung sind in dem Datenträgerkörper derart anordnbar, dass die Eingabeeinrichtung und die Anzeigefläche der Anzeigeeinrichtung in die gleiche oder in eine unterschiedliche Richtung weisen. Durch Betätigen der Eingabeeinrichtung kann ein Nutzer des Datenträgers eine Funktionalität des Datenträgers anstoßen, z.B. das Erzeugen eines Einmal-Passworts. Es ist dann zweckmäßig, dass die Anzeigeeinrichtung gleichzeitig eingesehen werden kann, z.B. zum Lesen des generierten Einmal-Passworts, ohne den Datenträger dazu umwenden zu müssen.

Vorzugsweise umfasst das Modul auf einer der Leiterplatten Kontakte zum Kontaktieren von Batterieanschlüssen einer in den Datenträgerkörper vorzugsweise integrierten Batterie, wobei die Anschlüsse der Batterie in die durchgängige Öffnung des Datenträgerkörpers hineinragen. Auf diese Weise können die integrierten Schaltkreise und die Anzeigeeinrichtung und andere elektronische Einheiten, z.B. ein Fingersensor auch unabhängig von einem Lesegerät, welches den Datenträger mit Energie versorgen kann, über die Batterie betrieben werden.

Beim Verfahren zum Herstellen des Datenträgers können die Kontaktschnittstelle, der zumindest eine Schaltkreis und die Anzeigeeinrichtung in Form eines vorstehend beschriebenen Moduls wie beschrieben in die Öffnung des Datenträgerkörpers eingesetzt werden, d.h. insbesondere, dass diese Einzelkomponenten vor dem Anordnen in der Öffnung des Datenträgerkörpers verbunden werden. Es ist gleichfalls möglich, dass eine Einzelkomponente, beispielsweise eine auf einer Leiterplatte angeordnete Anzeigeeinrichtung, zuerst in der Öffnung angeordnet wird und dann erst mit einer anderen Einzelkomponente, z.B. einem auf einer anderen Leiterplatte angeordneten Chipmodul mit Kontaktschnittstelle, verbunden wird, wonach schließlich auch die andere Einzelkomponente in der Öffnung angeordnet wird. Auf diese Weise kann in manchen Fällen die Qualität der Verbindung zwischen den Komponenten des Moduls und dem Datenträgerkörper verbessert werden.

Der Datenträger kann auf der Seite des Datenträgerkörpers, auf der die Anzeigefläche der Anzeigeeinrichtung angeordnet ist, mit einer Schutzschicht überzogen werden, um die Anzeigeeinrichtung und gegebenenfalls auch die vorstehend beschriebene Eingabeeinrichtung zu schützen.

Als Kontaktschnittstelle eignet sich z.B. ein Kontaktfeld gemäß ISO/IEC 7816 oder eine USB-Schnittstelle. Als Kontaktlosschnittstelle eignet sich z.B. eine Antenne. Bei der Kontaktlosschnittstelle befindet sich an der Stelle der Kontaktflächen eine Abdeckung, z.B. ein Tape, auf dem sich z.B. eine optische Darstellung eines Firmenlogos befinden kann. Als Anzeigeeinrichtung eignet sich z.B. ein Display oder eine LED oder ein Feld von LEDs. Der Datenträgerkörper kann die Maße einer Chipkarte gemäß ISO/ IEC 7816 besitzen.

Die Erfindung wird im Folgenden mit Bezug auf die beiliegenden Zeichnungen beispielhaft beschrieben. Darin zeigen:
- Figur 1: einen Querschnitt einer ersten Ausgestaltung einer ersten Ausführungsform eines erfindungsgemäßen Moduls, eingesetzt in eine erste Ausgestaltung eines erfindungsgemäßen Datenträgerkörpers;
- Figur 2A: einen Querschnitt einer zweiten Ausgestaltung der ersten Ausführungsform des Moduls, eingesetzt in eine zweite Ausgestaltung des Datenträgerkörpers;
- Figur 2B: den Datenträgerkörper aus Figur 2A im Querschnitt ohne das eingesetzte Modul;
- Figur 2C: den Datenträgerkörper aus Figur 2B in Draufsicht;
- Figur 3: einen Querschnitt einer ersten Ausgestaltung eines Moduls, eingesetzt in eine Ausgestaltung eines nicht erfindungsgemäßen Datenträgerkörpers;
- Figur 4: einen Querschnitt einer zweiten Ausgestaltung der zweiten Ausführungsform des Moduls;
- Figur 5: einen Querschnitt einer dritten Ausgestaltung der zweiten Ausführungsform des Moduls;
- Figur 6: einen Querschnitt einer vierten Ausgestaltung der zweiten Ausführungsform des Moduls;
- Figur 7A: einen Querschnitt einer fünften Ausgestaltung der zweiten Ausführungsform des Moduls;
- Figur 7B: das Modul aus Figur 7A in Untersicht;
- Figur 8: einen Querschnitt einer sechsten Ausgestaltung der zweiten Ausführungsform des Moduls; und
- Figur 9: einen Querschnitt einer siebten Ausgestaltung der zweiten Ausführungsform des Moduls.

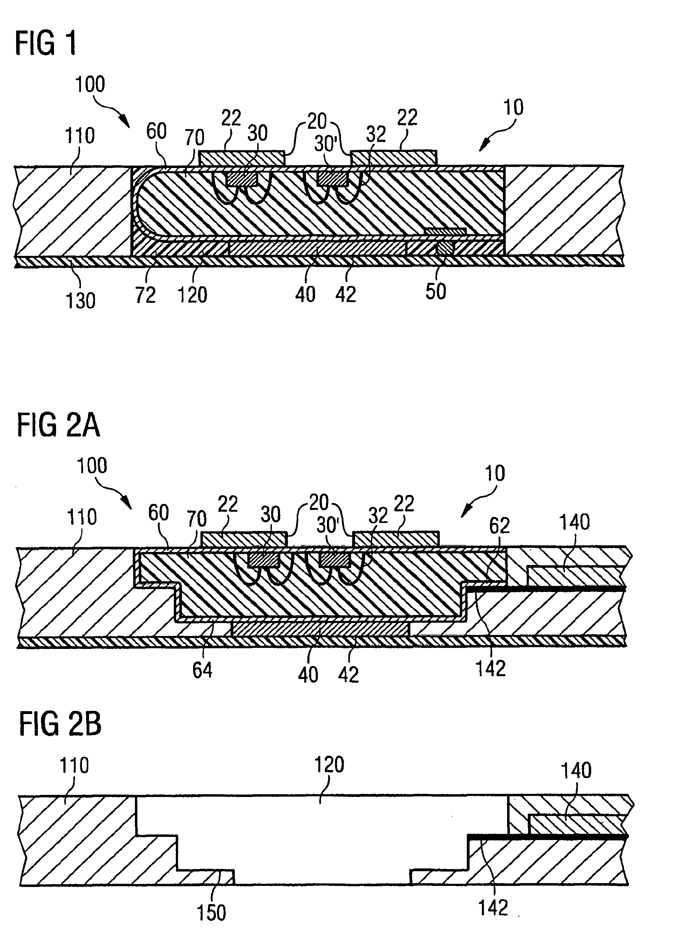

Mit Bezug auf Figur 1 umfasst eine erste Ausgestaltung eines Moduls 10 eine Kontaktschnittstelle 20, integrierte Schaltkreise 30 und 30', eine Anzeigeeinrichtung 40, hier in Form eines Displays, mit Anzeigefläche 42 und eine Eingabeeinrichtung 50 in Form eines Eingabeknopfs, wobei die Eingabeeinrichtung 50 im Prinzip optional ist. Diese Bauteile sind auf einer flexiblen Leiterplatte 60 angeordnet und miteinander elektronisch zu dem Modul 10 verbunden. Die flexible Leiterplatte 60 kann beispielsweise mittels einer Polyimidfolie hergestellt werden, die das Ausbilden von besonders feinen Kupferbahnen erlaubt. Die Schaltkreise 30 und 30' sind mittels Bond-Drähten 32 mit den Kontaktflächen 22 der Kontaktschnittstelle 20 kontaktiert. Es ist genauso möglich, die Schaltkreise 30, 30' mittels des so genannten flip-chip-Verfahrens mit der Leiterplatte elektrisch zu verbinden. Die elektrisch leitfähigen Verbindungen der Bauelemente können durch Drahtbonden oder Löten, z.B. durch sog. solderbumps, oder andere geeignete elektrische leitfähige Verbindungen hergestellt werden. Das Modul 10 ist mittels eines Vergussmaterials 70 vergossen, wodurch das Modul 10 derart ausgeformt ist, dass die Kontaktflächen 22 der Kontaktschnittstelle 20 und die Anzeigefläche 42 des Displays 40 in entgegengesetzte Richtungen weisen.

Das Modul 10 ist in dem vorliegenden Ausführungsbeispiel in eine durchgängige Öffnung 120 eines flächigen Datenträgerkörpers 110 eingesetzt, welche nach dem Einsetzen des Moduls 10 mit Vergussmaterial 72, wie in Figur 1 gezeigt, vergossen worden ist. Grundsätzlich kann das Modul auch in eine Kavität eingesetzt werden, die ausgefräst wird oder durch ein entsprechendes Herstellungsverfahren des Kartenkörpers hergestellt wird. Als Datenträger 100 wird der Datenträgerkörper 110 mit eingesetztem Modul 10 bezeichnet. Die Öffnung 120 ist in den Datenträgerkörper 110 gefräst. Es ist auch möglich, die Öffnung 120 beim Bilden des Datenträgerkörpers 110 mittels Spritzgießens auszusparen. Die Seite des Datenträgerkörpers 110, auf der das Display 40 angeordnet ist, ist mit einer transparenten Schutzfolie 130 überzogen, um das Display 40 und den Knopf 50 zusätzlich zu schützen. Die Folie 130 kann aber auch fehlen. Die Schutzfolie 130 kann auch ein Teil des Datenträgerkörpers 110 sein und eine Öffnung 120 aufweisen. Das Modul 10 weist eine derartige Dicke auf, dass das Display 40 und der Knopf 50 auf der einen Seite des Datenträgerkörpers 110 plan mit demselben abschließen und die Kontaktflächen 22 der Kontaktschnittstelle 20 auf der anderen Seite des Datenträgerkörpers 110 leicht aus demselben herausragen, um von entsprechenden Gegenkontakten eines Kontakt-Lesegeräts (nicht gezeigt) zuverlässig kontaktiert werden zu können.

Der integrierte Schaltkreis 30 steuert den Datenträger 100 und ist eingerichtet, über die Kontaktschnittstelle 20 Daten mit einem externen Kontakt-Lesegerät auszutauschen und zu verarbeiten. Der Schaltkreis 30' steuert das Display 40. Es ist gleichfalls möglich, dass der Schaltkreis 30 das Steuern des Displays 40 mit übernimmt, wodurch auf den Schaltkreis 30' verzichtet werden kann. Die Schaltkreise 30 und 30' müssen nicht bei den Kontaktflächen 22 liegen, sie können sich auch beim Display 40 befinden. Die Elektronik kann aber auch in der Weise vereinfacht werden, dass das Display 40 ausschließlich von einem Kontakt-Lesegerät über die Kontaktschnittstelle 20 angesteuert wird. Auch eine so genannte "discrete component", also ein Bauteil, welches nur aus einem Schaltkreis besteht, wird im Rahmen dieser Erfindung als integrierter Schaltkreis bezeichnet, z.B. ein LED. Zudem ist es möglich, dass ein oder mehrere weitere integrierte Schaltkreise, also auch "discrete components", auf der flexiblen Leiterplatte 60 angeordnet werden, beispielsweise ein Kryptochip, der speziell zum Entschlüsseln und Verschlüsseln von Daten eingerichtet ist.

Die Kontaktschnittstelle 20 ist als Kontaktfeld nach ISO/IEC 7816 ausgebildet. Eine andere Ausgestaltung der Kontaktschnittstelle 20 ist möglich.

Der Eingabeknopf 50 dient zur manuellen Eingabe von Daten in den Datenträger 100. Dazu ist der Knopf 50 mit dem integrierten Schaltkreis 30 und dem Display 40 über die Leiterplatte 60 verbunden. Durch das Betätigen des Knopfs 50 kann ein Nutzer des Datenträgers 100 beispielsweise das Generieren eines Einmalpassworts in dem Schaltkreis 30 und das Anzeigen des generierten Einmalpassworts auf dem Display 40 veranlassen. Weitere oder alternative Funktionen des Datenträgers 100 können mittels des Knopfs 50 abrufbar sein. Es ist möglich, dass als Eingabeeinrichtung 50 eine Mehrzahl von Knöpfen oder dergleichen vorgesehen sind. Der Knopf 50 ist in dem Modul 10 auf derselben Seite wie das Display 40, also gegenüber der Kontaktschnittstelle 20, angeordnet. Auf diese Weise kann der Nutzer das Display 40 betrachten, während er den Knopf 50 betätigt. Die Anordnung des Displays 40 in der beschriebenen Weise, also auf der der Kontaktschnittstelle 20 gegenüberliegenden Seite des Moduls 10, ermöglicht es z.B., das Display 40 abzulesen, während der Datenträger 100 mit einem geeignet eingerichteten Kontakt-Lesegerät (nicht gezeigt), z.B. einem Chipkartenleser, kontaktiert ist.

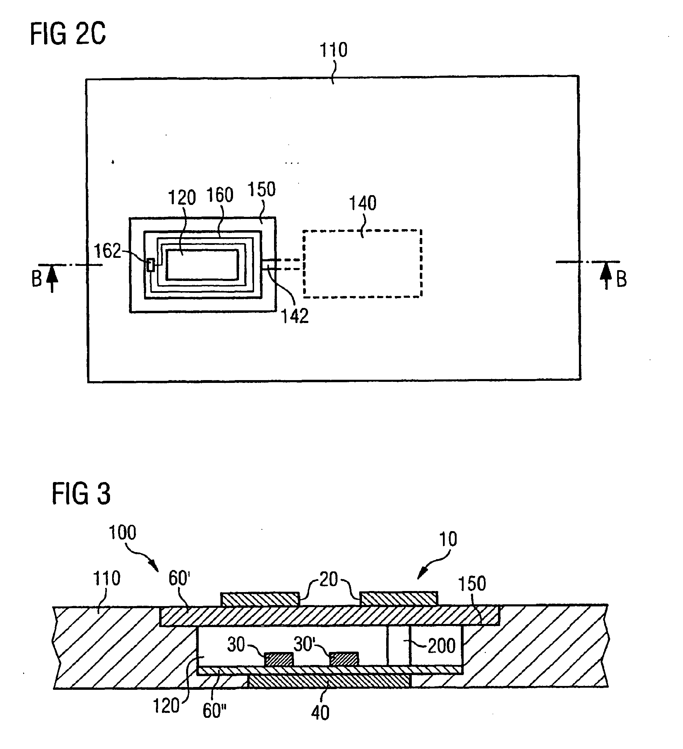

In Figur 2A ist eine zweite Ausgestaltung der ersten Ausführungsform des Moduls 10 mit einer flexiblen Leiterplatte 60 gezeigt. Die Figuren 2B und 2C zeigen den entsprechenden Datenträgerkörper 110 ohne das Modul 10, wobei Figur 2B einen Querschnitt entlang der Linie B-B des in Figur 2C in Draufsicht dargestellten Datenträgerkörpers 110 zeigt. Bauteile, die identisch sind mit den in Figur 1 beschriebenen Bauteilen, sind mit denselben Bezugszeichen bezeichnet und werden hier und im Folgenden nicht mehr näher beschrieben. Das Vergussmaterial 70 ist in der in Figur 2A illustrierten Ausgestaltung stufenförmig ausgebildet. Dementsprechend besitzt auch die durchgehende Öffnung 120 (Fig. 2B) im Datenträgerkörper 110 eine stufenförmige Gestalt. Das Modul 10 wird in die Öffnung 120 geklebt, wobei die Stufen 150 der Öffnung 120 als Klebestellen dienen. Auf diese Weise kann ein guter Kompromiss zwischen der Biegsamkeit des Datenträgerkörpers 110 und der Zuverlässigkeit der Verbindung des Moduls 10 mit dem Datenträgerkörper 110 erreicht werden.

Der Datenträger 100 umfasst weiterhin eine Energiequelle, z.B. eine Batterie 140, die in Form einer Flachbatterie in den Datenträgerkörper 110 integriert ist oder ein entsprechend großer Kondensator. Batterieanschlüsse 142 ragen in die Öffnung 120 derart hinein, dass sie von entsprechenden Kontakten 62 auf der flexiblen Leiterplatte 60 kontaktiert werden. Ein weiterer Kontakt 64 auf der Leiterplatte 60 kontaktiert eine Kontaktlos-Schnittstelle 160, die in Form einer Antennenspule auf eine der Stufen 150 der Öffnung 120 aufgebracht worden ist und ihrerseits einen Gegenkontakt 162 aufweist (Fig. 2C). Für eine Kontaktlosschnittstelle werden zwei Kontakte benötigt.

Figur 3 zeigt ein Beispiel, nicht gemäß der Erfindung, eines Moduls 10, eingesetzt in einen Datenträgerkörper 110 gemäß einer dritten Ausgestaltung. Die durchgängige Öffnung 120 des Datenträgerkörpers 110 ist, wie vorstehend in den Figuren 2A - 2C illustriert, stufenförmig ausgebildet. Das Modul 10 umfasst zwei Leiterplatten 60' und 60". Die Leiterplatten 60', 60" können z.B. aus FR4-Material (mit Epoxidharz gebundenes Glasfasergewebe) hergestellt sein, solange sie eine gewissen Steifigkeit aufweisen sollen und nicht allzu flexibel sein müssen. Zur Herstellung einer flexiblen Leiterplatte kann, wie vorstehend beschrieben, z.B. eine Polyimidfolie herangezogen werden. Auf der ersten Leiterplatte 60' ist z.B. die Kontaktschnittstelle 20 aufgebracht, auf der zweiten Leiterplatte 60" die integrierten Schaltkreise 30 und 30' und das Display 40. Die Leiterplatten 60' und 60" sind z.B. mittels einer anisotropen Kontaktleiste 200 elektronisch miteinander kontaktiert, wobei alternativ zur anisotropen Kontaktleiste 200 auch eine Silberpaste verwendet werden kann. Dabei ist die Leiterplatte 60" mit dem Datenträgerkörper 110 auf einer zweiten Stufe der Öffnung 120 in einem ersten Schritt und die Leiterplatte 60' auf einer ersten Stufe der Öffnung 120 in einem zweiten Schritt verklebt.

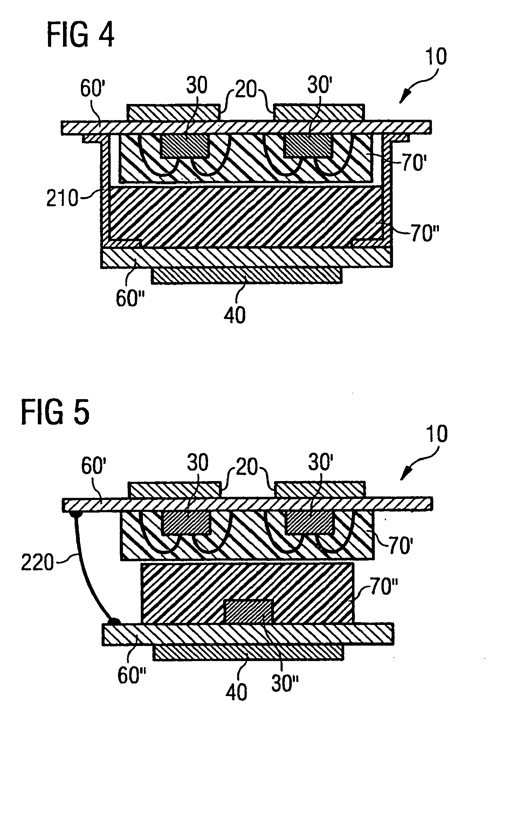

Eine solche Form des nicht erfindungsgemäßen Moduls 10 mit zwei miteinander elektronisch verbundenen Leiterplatten 60 und 60' kann auch mittels eines Standardchipmoduls und/oder eines Standarddisplaymoduls, z.B. eines LED-Moduls gebildet sein, die mittels der Kontaktleiste 200 oder einer anderen geeigneten Verbindungseinrichtung, wie sie nachstehend beispielhaft mit Bezug auf die Figuren 4 bis 7B dargestellt werden, elektronisch verbunden sind. Dabei umfasst das Standardchipmodul auf der ersten Leiterplatte 60' einen mit der Kontaktschnittstelle 20 kontaktierten und dann vergossenen integrierten Schaltkreis 30 und das Standarddisplaymodul auf der zweiten Leiterplatte 60" außer dem Display 40 z.B. noch den integrierten Schaltkreis 30' zum Ansteuern der Anzeigeelemente des Displays 40.

Mit Bezug auf Figur 4 umfasst das Modul 10 gemäß einer zweiten Ausgestaltung der zweiten Ausführungsform wieder zwei Leiterplatten 60' und 60". Auf die Leiterplatte 60' sind die Kontaktschnittstelle 20 und die integrierten Schaltkreise 30 und 30' aufgebracht, welche mittels eines ersten Vergussmaterials 70' vergossen sind. Auf der zweiten Leiterplatte 60" ist in dieser Ausgestaltung lediglich das Display 40 angeordnet. Die Leiterplatten 60' und 60" sind mittels eines Drahtgitters 210 elektronisch miteinander verbunden. Dabei ist das Drahtgitter seinerseits mit einem zweiten Vergussmaterial 70" teilweise vergossen und mit den Leiterplatten 60', 60" mittels eines leitfähigen Klebers verklebt. Es ist auch möglich, die Leiterplatten 60' und 60" mit dem Drahtgitter 210 zu verlöten oder zu verschweißen.

Figur 5 zeigt eine dritte Ausgestaltung der zweiten Ausführungsform des Moduls 10 mit den zwei Leiterplatten 60' und 60". Das Modul 10 umfasst hier drei integrierte Schaltkreise 30, 30' und 30", die auf die beiden Leiterplatten 60' und 60" verteilt sind. Die Schaltkreise 30, 30' und 30" sind mit Vergussmaterialien 70' und 70" vergossen, welche eine plane Oberfläche haben. Alternativ zur planen Oberfläche können zum Fixieren und Positionieren der Vergußmaterialien 70' und 70" auch Befestigungseinrichtungen z.B. in Form von Nut und Feder vorgesehen sein. Dabei könnte beispielsweise eine Feder des Vergußmaterials 70' in eine Nut des Vergußmaterials 70" eingreifen. Auf diese Weise ist es möglich, die vergossenen Leiterplatten 60' und 60" miteinander zu verkleben. Dadurch können die Leiterplatten 60' und 60" geeignet beabstandet werden, d.h. das Modul 10 besitzt dann eine Dicke, die im Wesentlichen einer Dicke eines Datenträgerkörpers 110 entspricht, in den das Modul 10 eingesetzt werden soll. Die Leiterplatten 60' und 60" sind mittels Bond-Drähten 220 elektronisch miteinander verbunden. Es ist auch möglich, das Modul 10 nach dem Bonden erneut zu vergießen, um die Bond-Drähte 220 und ihre Kontaktstellen mit den Leiterplatten 60' und 60" zu schützen.

Anstatt des Vergießens mit einem Vergussmaterial 70 kann nicht erfindungsgemäßen auch eine mit einem Klebstoff oder einem anderen, vorzugsweise flüssigen oder teigigen, Material gefüllte Dose (nicht gezeigt) auf einer oder beiden Leiterplatten 60', 60" angeordnet werden, wobei das Material im Inneren der Dose die auf der entsprechenden Leiterplatte 60', 60" angeordneten Schaltkreise umgibt wie zuvor das Vergussmaterial 70', 70".

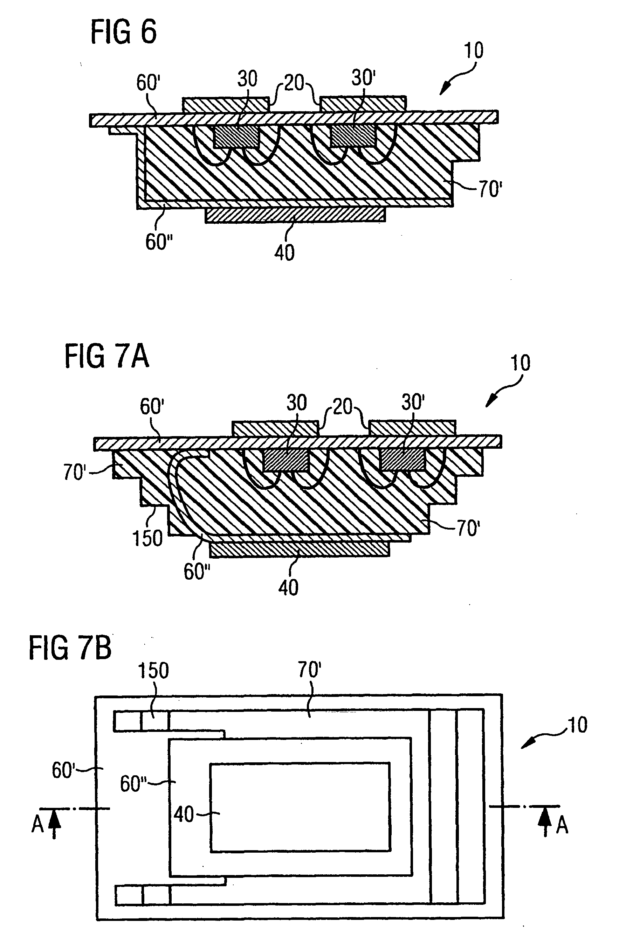

Figur 6 zeigt eine vierte Ausgestaltung der zweiten Ausführungsform mit den beiden Leiterplatten 60' und 60". Hier ist nur die erste Leiterplatte 60' auf der Seite, auf der die integrierten Schaltkreise 30 und 30' angeordnet sind, mit einem Vergussmaterial 70' vergossen. Die zweite Leiterplatte 60", auf der das Display 40 angeordnet ist, ist als flexible Leiterplatte 60" ausgebildet und mit der ersten Leiterplatte 60' durch Verlöten elektronisch verbunden. Es ist auch möglich, dass die beiden Leiterplatten 60' und 60" elektrisch leitend verklebt oder verschweißt werden. Zusätzlich ist die zweite Leiterplatte 60" mit dem Vergussmaterial 70', das, wie vorstehend beschrieben, geeignet plan geschliffen worden ist, verklebt. Auch auf diese Weise können die beiden Leiterplatten 60' und 60" bereits vor dem Einsetzen in einen Datenträgerkörper derart räumlich zueinander angeordnet werden, dass sie an gegenüberliegenden Seiten des Moduls 10 angeordnet sind. Das Vergussmaterial 70' ist einseitig stufenförmig ausgebildet, wodurch ein Verkleben des Moduls 10 beim Einsetzen in eine entsprechende Öffnung eines Datenträgerkörpers 110 erleichtert wird. Es ist möglich, das Vergussmaterial 70' auf der Seite, auf der die beiden Leiterplatten 60' und 60" verbunden sind, angeschrägt oder auch stufig auszuformen, um die Verbindung der Leiterplatten 60', 60" zu vereinfachen.

Mit Bezug auf die Figuren 7A und 7B ist eine fünfte Ausgestaltung der Ausführungsform mit den beiden Leiterplatten 60' und 60" dargestellt. Figur 7B zeigt eine Untersicht des Moduls 10 aus Figur 7A und Figur 7A zeigt einen Querschnitt entlang der Linie A-A aus Figur 7B. Im Gegensatz zu der Ausgestaltung in Figur 6 ist hier die flexible Leiterplatte 60" einseitig mit Kupferkontakten beschichtet. Durchkontaktierungen, wie sie in der Ausgestaltung aus Figur 6 notwendig waren, können hier vermieden werden. Das Vergussmaterial 70' ist beidseitig stufenförmig ausgebildet. Prinzipiell kann auch keine Stufe vorhanden sein.

Für alle Ausgestaltungen der zweiten Ausführungsform, die vorstehend mit Bezug auf die Figuren 3 bis 7B beschrieben worden sind, gilt, dass eine der beiden Leiterplatten 60', 60" auch in einen entsprechenden Datenträgerkörper 110 eingesetzt werden kann, bevor die Leiterplatten (60', 60") mittels einer der beschriebenen Einrichtungen elektronisch miteinander verbunden werden. Auf diese Weise ist es möglich, beim Herstellen des Datenträgers 100 auf Einzelkomponenten und nicht auf vorgefertigte Module, bei denen die Leiterplatten 60', 60" bereits elektronisch verbunden sind, zurückzugreifen. In manchen Fällen kann zudem eine geforderte Zuverlässigkeit der Verbindung der Einzelkomponenten in der Öffnung 120 des Datenträgerkörpers 110 mit dem Datenträgerkörper 110 besser gewährleistet werden, wenn beispielsweise die Leiterplatte 60" mit dem Display 40 und die Leiterplatte 60' mit der Kontaktschnittstelle 20 in separaten Schritten in die Öffnung 120 geklebt werden (Fig. 4). Geklebt wird dabei auf den Stufen.

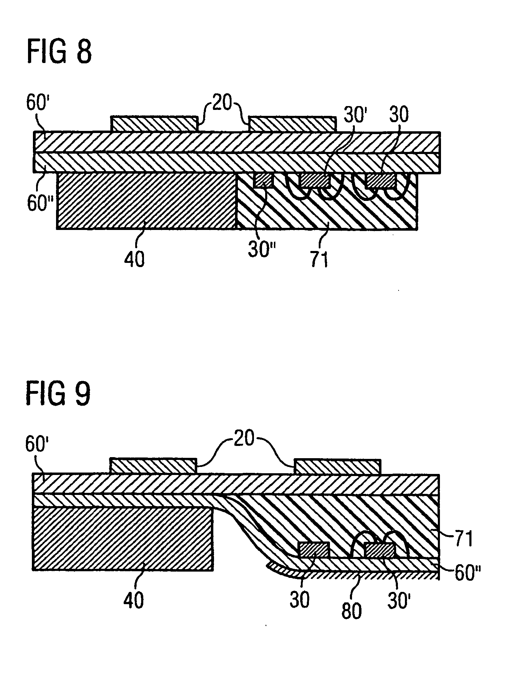

Mit Bezug auf Figur 8 sind in einer sechsten Ausgestaltung der Ausführungsform die beiden Leiterplatten 60' und 60" direkt miteinander verklebt oder anders geeignet elektronisch verbunden. Grundsätzlich können die beiden Leiterplatten 60' und 60" auch durch eine Leiterplatte hergestellt werden. Die Schaltkreise 30, 30', 30" sind auf der gleichen Seite der Leiterplatte 60" angeordnet wie das Display 40. In den Modulen 10 gemäß den vorstehenden, mit Bezug auf die Figuren 1 bis 7 beschriebenen Ausgestaltungen waren die Schaltkreise 30, 30', 30" gegen Lichteinfluss stets durch die Kontaktschnittstelle 20 und das Display 40 geschützt, zwischen denen die Schaltkreise 30, 30', 30" angeordnet waren. In dem Modul aus Figur 8 werden die Schaltkreise 30, 30', 30" zu diesem Zweck mit einem Lichtschutz-Vergussmaterial 71 vergossen, welches gleichzeitig für eine plane Oberfläche des Moduls 10 auf der Seite des Moduls 10 sorgt, auf der das Display 40 angeordnet ist. Prinzipiell kann das Lichtschutz-Vergußmaterial 71 dünner sein, als das Display 40. Ferner kann das Lichtschutz-Vergußmaterial 71 eine Stufe ausbilden, was Vorteile für die Montage des Displays 40 hat.

In dem Modul 10, welches in Figur 9 dargestellt ist, sind die Schaltkreise 30, 30' auf der Leiterplatte 60" zwar auf der Seite gegenüber dem Display 40 angeordnet, jedoch nicht hinter dem Display 40, sondern daneben, vergossen mit einem Vergussmaterial 70", welches auch ein Lichtschutz-Vergussmaterial sein kann. Um die Schaltkreise 30, 30' zusätzlich gegen Lichteinfall zu schützen, ist die flexible Leiterplatte 60" auf der Seite gegenüber den Schaltkreisen 30, 30' mit einer Lichtschutzschicht 80, z.B. in Form einer Kupferschicht, überzogen. Das Anordnen der Schaltkreise 30, 30' auf der Leiterplatte 60" auf der gegenüberliegenden Seite des auf der Leiteplatte 60" angeordneten Displays 40 schützt das Display 40 zusätzlich vor Beschädigung, wenn die Schaltkreise 30, 30' z.B. auf die Leiterplatte 60" gelötet werden.

## Patentansprüche

1. Modul (10) zum Einsetzen in einen Datenträgerkörper (110), umfassend eine Kontaktschnittstelle (20) mit einer Kontaktfläche (22), zumindest einen integrierten Schaltkreis (30, 30', 30") und eine Anzeigeeinrichtung (40) mit einer Anzeigefläche (42), wobei die Kontaktschnittstelle (20), der zumindest eine integrierte Schaltkreis (30, 30', 30") und die Anzeigeeinrichtung (40) derart verbunden sind, dass das Modul (10) derart in dem Datenträgerkörper (110) anordnenbar ist, dass die Kontaktfläche (22) der Kontaktschnittstelle (20) und die Anzeigenfläche (42) der Anzeigeeinrichtung (40) in entgegengesetzte Richtungen weisen,
wobei das Modul (10) als flexible Leiterplatte (60) ausgebildet ist, auf welcher die Kontaktschnittstelle (20), der zumindest eine integrierte Schaltkreis (30, 30', 30") und die Anzeigeeinrichtung (40) elektronisch miteinander verbunden sind
und wobei
das Modul (10) mittels eines Vergussmaterials (70) derart vergossen ist, dass die Kontaktschnittstelle (20) und die Anzeigeeinrichtung (40) auf einander gegenüberliegenden Seiten des vergossenen Moduls (10) angeordnet sind.

2. Modul (10) zum Einsetzen in einen Datenträgerkörper (110), umfassend eine Kontaktschnittstelle (20) mit einer Kontaktfläche (22), zumindest einen integrierten Schaltkreis (30, 30', 30") und eine Anzeigeeinrichtung (40) mit einer Anzeigefläche (42), wobei die Kontaktschnittstelle (20), der zumindest eine integrierte Schaltkreis (30, 30', 30") und die Anzeigeeinrichtung (40) derart verbunden sind, dass das Modul (10) derart in dem Datenträgerkörper (110) anordnenbar ist, dass die Kontaktfläche (22) der Kontaktschnittstelle (20) und die Anzeigenfläche (42) der Anzeigeeinrichtung (40) in entgegengesetzte Richtungen weisen,
wobei
das Modul (10) zwei elektronisch miteinander verbundene Leiterplatten (60', 60") umfasst, wobei auf einer ersten der Leiterplatten (60') die Kontaktschnittstelle (20) angeordnet ist und auf einer zweiten der Leiterplatten (60") die Anzeigeeinrichtung (40) angeordnet ist
und wobei
zwei Vergussmaterialien (70', 70") in dem Modul (10) derart angeordnet sind, dass die erste Leiterplatte (60') und die zweite Leiterplatte (60") voneinander beabstandet angeordnet in dem Datenträgerkörper (110) anordnenbar sind und wobei
die erste Leiterplatte (60') auf der gegenüberliegenden Seite der auf der ersten Leiterplatte (60') angeordneten Kontaktschnittstelle (20) mit einem ersten Vergussmaterial (70') vergossen ist und die zweite Leiterplatte (60") auf der gegenüberliegenden Seite der auf der zweiten Leiterplatte (60") angeordneten Anzeigeeinrichtung (40) mit einem zweiten Vergussmaterial (70") vergossen ist.

3. Modul (10) zum Einsetzen in einen Datenträgerkörper (110), umfassend eine Kontaktschnittstelle (20) mit einer Kontaktfläche (22), zumindest einen integrierten Schaltkreis (30, 30', 30") und eine Anzeigeeinrichtung (40) mit einer Anzeigefläche (42), wobei die Kontaktschnittstelle (20), der zumindest eine integrierte Schaltkreis (30, 30', 30") und die Anzeigeeinrichtung (40) derart verbunden sind, dass das Modul (10) derart in dem Datenträgerkörper (110) anordnenbar ist, dass die Kontaktfläche (22) der Kontaktschnittstelle (20) und die Anzeigenfläche (42) der Anzeigeeinrichtung (40) in entgegengesetzte Richtungen weisen,
wobei
das Modul (10) zwei elektronisch miteinander verbundene Leiterplatten (60', 60") umfasst, wobei auf einer ersten der Leiterplatten (60') die Kontaktschnittstelle (20) angeordnet ist und auf einer zweiten der Leiterplatten (60") die Anzeigeeinrichtung (40) angeordnet ist
und wobei
Vergussmaterial (70) in dem Modul (10) derart angeordnet ist, dass die erste Leiterplatte (60') und die zweite Leiterplatte (60") räumlich zueinander angeordnet in dem Datenträgerkörper (110) anordnenbar sind und wobei
zumindest eine der beiden Leiterplatten (60") flexibel ausgebildet ist und mit der anderen Leiterplatte (60') mittels einer Verlötung, Verklebung oder Verschweißung elektronisch verbunden ist.

4. Modul (10) zum Einsetzen in einen Datenträgerkörper (110), umfassend eine Kontaktschnittstelle (20) mit einer Kontaktfläche (22), zumindest einen integrierten Schaltkreis (30, 30', 30") und eine Anzeigeeinrichtung (40) mit einer Anzeigefläche (42), wobei die Kontaktschnittstelle (20), der zumindest eine integrierte Schaltkreis (30, 30', 30") und die Anzeigeeinrichtung (40) derart verbunden sind, dass das Modul (10) derart in dem Datenträgerkörper (110) anordnenbar ist, dass die Kontaktfläche (22) der Kontaktschnittstelle (20) und die Anzeigenfläche (42) der Anzeigeeinrichtung (40) in entgegengesetzte Richtungen weisen,
wobei
das Modul (10) zwei elektronisch miteinander verbundene Leiterplatten (60', 60") umfasst, wobei auf einer ersten der Leiterplatten (60') die Kontaktschnittstelle (20) angeordnet ist und auf einer zweiten der Leiterplatten (60") die Anzeigeeinrichtung (40) angeordnet ist
und wobei
das Modul (10) zumindest einen integrierten Schaltkreis (30, 30', 30") umfasst, wobei zumindest ein Schaltkreis (30, 30', 30") auf der ersten Leiterplatte (60') angeordnet ist und/oder zumindest ein Schaltkreis (30, 30', 30") auf der zweiten Leiterplatte (60") angeordnet ist
wobei
zumindest einer der Schaltkreise (30, 30', 30") auf der zweiten Leiterplatte (60") auf derselben Seite wie die Anzeigeeinrichtung (40) angeordnet und mittels eines Lichtschutz-Vergussmaterials (71) vergossen ist.

5. Modul (10) nach Anspruch 4, **dadurch gekennzeichnet, dass** die zweite Leiterplatte (60") auf der gegenüberliegenden Seite zumindest eines auf der zweiten Leiterplatte (60") angeordneten Schaltkreises (30, 30') mit einer Lichtschutzschicht (80) überzogen ist.

6. Modul (10) nach Anspruch 2 bis 5, **dadurch gekennzeichnet, dass** die erste Leiterplatte (60') und die zweite Leiterplatte (60")
- mittels einer die beiden Leiterplatten (60', 60") kontaktierenden anisotropen Kontaktleiste (200); oder
- mittels eines mit den beiden Leiterplatten (60', 60") durch eine Verlötung, Verklebung oder Verschweißung verbundenen Drahtgitters (210); oder
- mittels Bond-Drähten (220)
elektronisch verbunden sind.

7. Verfahren zum Herstellen eines Moduls (10) nach einem der Ansprüche 1 bis 6.

8. Verfahren zum Herstellen eines portablen Datenträgers (100), umfassend die Schritte:
- Bereitstellen eines flächigen Datenträgerkörpers (110) mit einer durchgängigen Öffnung (120);
- Bereitstellen einer Kontaktschnittstelle (20) mit einer Kontaktfläche (22), zumindest eines integrierten Schaltkreises (30, 30', 30") und einer Anzeigeeinrichtung (40) mit einer Anzeigefläche (42);
- Verbinden der Kontaktschnittstelle (20), des zumindest einen Schaltkreises (30, 30', 30") und der Anzeigeeinrichtung (40) miteinander zu einem Modul nach einem der Ansprüche 1 bis 6; und
- Anordnen der Kontaktschnittstelle (20), des zumindest einen Schaltkreises (30, 30', 30") und der Anzeigeeinrichtung (40) in der durchgängigen Öffnung (120) des Datenträgerkörpers (110);
**dadurch gekennzeichnet, dass** die Kontaktschnittstelle (20) und die Anzeigeeinrichtung (40) in der Öffnung (120) derart auf gegenüberliegenden Seiten des Datenträgerkörpers (110) angeordnet werden, dass die Kontaktfläche (22) der Kontaktschnittstelle (20) und die Anzeigefläche (42) der Anzeigeeinrichtung (42) in entgegengesetzte Richtungen weisen.

9. Portabler Datenträger (100), umfassend einen flächigen Datenträgerkörper (110) mit einer durchgängigen Öffnung (120) und ein in die durchgängige Öffnung (120) des Datenträgerkörpers (110) eingesetztes Modul (10) nach einem der Ansprüche 1 bis 6.

## Claims

1. A module (10) for insertion into a data carrier body (110), comprising a contact interface (20) with a contact area (22), at least one integrated circuit (30, 30', 30") and a display device (40) with a display area (42), wherein the contact interface (20), the at least one integrated circuit (30, 30', 30") and the display device (40) are connected such that the module (10) is disposable in the data carrier body (110) such that the contact area (22) of the contact interface (20) and the display area (42) of the display device (40) point in opposite directions,
wherein the module (10) is configured as a flexible circuit board (60) on which the contact interface (20), the at least one integrated circuit (30, 30', 30") and the display device (40) are electronically interconnected,
and wherein
the module (10) is potted by means of a potting material (70) such that the contact interface (20) and the display device (40) are disposed on mutually opposing sides of the potted module (10).

2. A module (10) for insertion into a data carrier body (110), comprising a contact interface (20) with a contact area (22), at least one integrated circuit (30, 30', 30") and a display device (40) with a display area (42), wherein the contact interface (20), the at least one integrated circuit (30, 30', 30") and the display device (40) are connected such that the module (10) is disposable in the data carrier body (110) such that the contact area (22) of the contact interface (20) and the display area (42) of the display device (40) point in opposite directions,
wherein
the module (10) comprises two electronically interconnected circuit boards (60', 60"), there being disposed on a first one of the circuit boards (60') the contact interface (20) and there being disposed on a second one of the circuit boards (60") the display device (40),
and wherein
two potting materials (70', 70") are disposed in the module (10) such that the first circuit board (60') and the second circuit board (60") are disposable in the data carrier body (110) so as to be spaced apart,
and wherein
the first circuit board (60') is potted with a first potting material (70') on the opposing side of the contact interface (20) disposed on the first circuit board (60'), and the second circuit board (60") is potted with a second potting material (70") on the opposing side of the display device (40) disposed on the second circuit board (60").

3. A module (10) for insertion into a data carrier body (110), comprising a contact interface (20) with a contact area (22), at least one integrated circuit (30, 30', 30") and a display device (40) with a display area (42), wherein the contact interface (20), the at least one integrated circuit (30, 30', 30") and the display device (40) are connected such that the module (10) is disposable in the data carrier body (110) such that the contact area (22) of the contact interface (20) and the display area (42) of the display device (40) point in opposite directions,
wherein
the module (10) comprises two electronically interconnected circuit boards (60', 60"), there being disposed on a first one of the circuit boards (60') the contact interface (20) and there being disposed on a second one of the circuit boards (60") the display device (40),
and wherein
potting material (70) is disposed in the module (10) such that the first circuit board (60') and the second circuit board (60") are disposable in the data carrier body (110) so as to be disposed spatially relative to each other,
and wherein
at least one of the two circuit boards (60") is configured flexibly and is electronically connected to the other circuit board (60') by means of a soldering, gluing or welding.

4. A module (10) for insertion into a data carrier body (110), comprising a contact interface (20) with a contact area (22), at least one integrated circuit (30, 30', 30") and a display device (40) with a display area (42), wherein the contact interface (20), the at least one integrated circuit (30, 30', 30") and the display device (40) are connected such that the module (10) is disposable in the data carrier body (110) such that the contact area (22) of the contact interface (20) and the display area (42) of the display device (40) point in opposite directions,
wherein
the module (10) comprises two electronically interconnected circuit boards (60', 60"), there being disposed on a first one of the circuit boards (60') the contact interface (20) and there being disposed on a second one of the circuit boards (60") the display device (40),
and wherein
the module (10) comprises at least one integrated circuit (30, 30', 30"), at least one circuit (30, 30', 30") being disposed on the first circuit board (60') and/or at least one circuit (30, 30', 30") on the second circuit board (60"),
wherein
at least one of the circuits (30, 30', 30") is disposed on the second circuit board (60") on the same side as the display device (40), and potted by means of a light-protective potting material (71).

5. The module (10) according to claim 4, **characterized in that** the second circuit board (60") is covered with a light-protective layer (80) on the opposing side of at least one circuit (30, 30') disposed on the second circuit board (60").

6. The module (10) according to claim 2 to 5, **characterized in that** the first circuit board (60') and the second circuit board (60") are electronically connected
- by means of an anisotropic contact strip (200) contacting the two circuit boards (60', 60"); or
- by means of a wire grid (210) connected to the two circuit boards (60', 60") by a soldering, gluing or welding; or
- by means of bonding wires (220).

7. A method for producing a module (10) according to any of claims 1 to 6.

8. A method for producing a portable data carrier (100), comprising the steps of:
- supplying a flat data carrier body (110) having a through opening (120);
- supplying a contact interface (20) having a contact area (22), at least one integrated circuit (30, 30', 30") and a display device (40) having a display area (42);
- interconnecting the contact interface (20), the at least one circuit (30, 30', 30") and the display device (40) into a module according to any of claims 1 to 6; and
- disposing the contact interface (20), the at least one circuit (30, 30', 30") and the display device (40) in the through opening (120) of the data carrier body (110);
**characterized in that** the contact interface (20) and the display device (40) are disposed in the opening (120) on opposing sides of the data carrier body (110) such that the contact area (22) of the contact interface (20) and the display area (42) of the display device (42) point in opposite directions.

9. A portable data carrier (100), comprising a flat data carrier body (110) with a through opening (120) and a module (10) according to any of claims 1 to 6 inserted into the through opening (120) of the data carrier body (110).

## Revendications

1. Module (10) destiné à être inséré dans un corps (110) de support de données, comprenant une interface à contact (20) ayant une surface de contact (22), au moins un circuit intégré (30, 30', 30") et un dispositif d'affichage (40) ayant une surface d'affichage (42), cependant que l'interface à contact (20), le au moins un circuit intégré (30, 30', 30") et le dispositif d'affichage (40) sont connectés de telle façon que le module (10) est agençable de telle façon dans le corps (110) de support de données que la surface de contact (22) de l'interface à contact (20) et la surface d'affichage (42) du dispositif d'affichage (40) sont orientées dans des directions opposées,
cependant que le module (10) est réalisé sous forme de plaque conductrice (60) flexible sur laquelle l'interface à contact (20), le au moins un circuit intégré (30, 30', 30") et le dispositif d'affichage (40) sont connectés électroniquement entre eux
et cependant que
le module (10) est moulé de telle façon au moyen d'un matériau de moulage (70) que l'interface à contact (20) et le dispositif d'affichage (40) sont agencés sur des côtés opposés l'un à l'autre du module (10) moulé.

2. Module (10) destiné à être inséré dans un corps (110) de support de données, comprenant une interface à contact (20) ayant une surface de contact (22), au moins un circuit intégré (30, 30', 30") et un dispositif d'affichage (40) ayant une surface d'affichage (42), **cependant que** l'interface à contact (20), le au moins un circuit intégré (30, 30', 30") et le dispositif d'affichage (40) sont connectés de telle façon que le module (10) est agençable de telle façon dans le corps (110) de support de données que la surface de contact (22) de l'interface à contact (20) et la surface d'affichage (42) du dispositif d'affichage (40) sont orientées dans des directions opposées,
cependant que
le module (10) comprend deux plaques conductrices (60', 60") connectées électroniquement entre elles, cependant que, sur une première des plaques conductrices (60'), l'interface à contact (20) est agencée et que, sur une deuxième des plaques conductrices (60"), le dispositif d'affichage (40) est agencé,
et cependant que
deux matériaux de moulage (70', 70") sont agencés de telle façon dans le module (10) que la première plaque conductrice (60') et la deuxième plaque conductrice (60") sont agençables de manière espacée entre elles dans le corps (110) de support de données,
et cependant que
la première plaque conductrice (60') est moulée, avec un premier matériau de moulage (70'), sur le côté opposé de l'interface à contact (20) agencée sur la première plaque conductrice (60'), et la deuxième plaque conductrice (60") est moulée, avec un deuxième matériau de moulage (70"), sur le côté opposé du dispositif d'affichage (40) agencé sur la deuxième plaque conductrice (60").

3. Module (10) destiné à être inséré dans un corps (110) de support de données, comprenant une interface à contact (20) ayant une surface de contact (22), au moins un circuit intégré (30, 30', 30") et un dispositif d'affichage (40) ayant une surface d'affichage (42), **cependant que** l'interface à contact (20), le au moins un circuit intégré (30, 30', 30") et le dispositif d'affichage (40) sont connectés de telle façon que le module (10) est agençable de telle façon dans le corps (110) de support de données que la surface de contact (22) de l'interface à contact (20) et la surface d'affichage (42) du dispositif d'affichage (40) sont orientées dans des directions opposées,
cependant que
le module (10) comprend deux plaques conductrices (60', 60") connectées électroniquement entre elles, cependant que, sur une première des plaques conductrices (60'), l'interface à contact (20) est agencée et que, sur une deuxième des plaques conductrices (60"), le dispositif d'affichage (40) est agencé,
et cependant que
du matériau de moulage (70) est agencé de telle façon dans le module (10) que la première plaque conductrice (60') et la deuxième plaque conductrice (60") sont agençables de manière spatialement relative l'une par rapport à l'autre dans le corps (110) de support de données, et cependant que
au moins une des deux plaques conductrices (60") est réalisée sous forme flexible et est connectée électroniquement à l'autre plaque conductrice (60') au moyen d'un brasage, collage ou soudage.

4. Module (10) destiné à être inséré dans un corps (110) de support de données, comprenant une interface à contact (20) ayant une surface de contact (22), au moins un circuit intégré (30, 30', 30") et un dispositif d'affichage (40) ayant une surface d'affichage (42), **cependant que** l'interface à contact (20), le au moins un circuit intégré (30, 30', 30") et le dispositif d'affichage (40) sont connectés de telle façon que le module (10) est agençable de telle façon dans le corps (110) de support de données que la surface de contact (22) de l'interface à contact (20) et la surface d'affichage (42) du dispositif d'affichage (40) sont orientées dans des directions opposées,
cependant que
le module (10) comprend deux plaques conductrices (60', 60") connectées électroniquement entre elles, cependant que, sur une première des plaques conductrices (60'), l'interface à contact (20) est agencée et que, sur une deuxième des plaques conductrices (60"), le dispositif d'affichage (40) est agencé,
et cependant que
le module (10) comprend au moins un circuit intégré (30, 30', 30"), cependant qu'au moins un circuit (30, 30', 30") est agencé sur la première plaque conductrice (60') et/ou au moins un circuit (30, 30', 30") est agencé sur la deuxième plaque conductrice (60"),
cependant que
au moins un des circuits (30, 30', 30") sur la deuxième plaque conductrice (60") est agencé du même côté que le dispositif d'affichage (40) et est moulé au moyen d'un matériau de moulage (71) protégeant de la lumière.

5. Module (10) selon la revendication 4, **caractérisé en ce que** la deuxième plaque conductrice (60") du côté opposé d'au moins un circuit (30, 30') agencé sur la deuxième plaque conductrice (60") est revêtue d'une couche (80) protégeant de la lumière.

6. Module (10) selon la revendication 2 à 5, **caractérisé en ce que** la première plaque conductrice (60') et la deuxième plaque conductrice (60") sont connectées électroniquement
- au moyen d'une réglette de contacts (200) anisotrope contactant les deux plaques conductrices (60', 60"); ou
- au moyen d'une grille métallique (210) connectée aux deux plaques conductrices (60', 60") au moyen d'un brasage, collage ou soudage; ou
- au moyen de fils d'interconnexion (220).

7. Procédé de fabrication d'un module (10) selon une des revendications de 1 à 6.

8. Procédé de fabrication d'un support de données portable (100), comprenant les étapes:
- mise à disposition d'un corps (110) de support de données plan ayant une ouverture traversante (120);
- mise à disposition d'une interface à contact (20) ayant une surface de contact (22), d'au moins un circuit intégré (30, 30', 30") et d'un dispositif d'affichage (40) ayant une surface d'affichage (42);
- connexion de l'interface à contact (20), du au moins un circuit intégré (30, 30', 30") et du dispositif d'affichage (40), entre eux, de manière à obtenir un module selon une des revendications de 1 à 6; et
- agencement de l'interface à contact (20), du au moins un circuit intégré (30, 30', 30") et du dispositif d'affichage (40) dans l'ouverture traversante (120) du corps (110) de support de données;
**caractérisé en ce que** l'interface à contact (20) et le dispositif d'affichage (40) sont, dans l'ouverture traversante (120), agencés de telle façon sur des côtés opposés du corps (110) de support de données que la surface de contact (22) de l'interface à contact (20) et la surface d'affichage (42) du dispositif d'affichage (42) sont orientées dans des directions opposées.

9. Support de données portable (100), comprenant uri corps (110) de support de données plan ayant une ouverture traversante (120) et un module (10) inséré dans l'ouverture traversante (120) du corps (110) de support de données selon une des revendications de 1 à 6.
